# EUROPEAN PATENT APPLICATION

(11) **EP 1 320 208 A2**
(43) Date of publication of application: **18.06.2003**
(21) Application number: 02021871.5
(22) Date of filing: 30.09.2002
(51) Int. Cl.: H04J 3/06, H04L 7/04, H04L 25/03, H04L 1/00

(54) **Serial communications system and method**

(30) Priority: 11.12.2001 US 20605
(71) Applicant: Agilent Technologies, Inc., Palo Alto, CA 94306 (US)
(72) Inventor: Amrutur, Bharadwaj S., Santa Clara, CA 95050 (US); Walker, Richard C., Palo Alto, CA 94306 (US)
(74) Representative: Liesegang, Roland, Dr.-Ing.

(57) **Abstract**

A communications system and method are disclosed. A transmitter (2) includes a scrambler (5) for scrambling original data, an ECC encoder (6) for converting scrambled data into ECC data, and a serializer for converting the ECC data into a serial stream. A receiver (3) includes a frame recoverer (9) for converting the serial data into frame data, an ECC decoder (10) from converting the frame data into ECC data and error indications, and a descrambler (14) for restoring the original data. By using the results of the ECC decoding to convert the serial data into frame data, line decoding is unnecessary, thereby reducing channel usage.

## Description

### BACKGROUND OF THE INVENTION

### Technical Field of the Invention

The present invention relates to serial data communications and, more particularly, to encoding, decoding, and frame recovery operations in serial data communications so as to improve bandwidth utilization in serial data communications systems.

### Description of Related Art

Much of modern progress is associated with advances in computers and computer networks (including the Internet) and their abilities in manipulating data. Meaningful data is typically represented in binary form as strings of bits. Each bit can assume one of two binary values, e.g., zero versus one, that are represented by physical analogs, e.g., low and high electrical voltages.

By way of illustration, a typical text message can be encoded character-by-character using a 8-bit ASCII code. The ASCII code typically uses seven bits for the actual character codes, and reserves one bit as a parity bit for error detection. An error in any one of the eight bits can be detected because the parity bit will no longer correspond to the other seven bits. In some systems, when a parity error is detected, the character can be resent until it is received error-free.

The parity bit is an example of an error-control code (ECC). While parity error detection does not indicate what the error is, other more complex ECCs do permit errors to be corrected on the fly. These error-correction codes are particularly valuable where it is burdensome or impossible to request that data be resent. Generally, error-control coding requires expanding the number of bits required to represent a given amount of information. Also, in general, more bits must be added to achieve more robust (in terms of the severity of the errors that can be corrected) error control.

In a typical serial communications system, the ECC data is serialized and then transmitted to a receiving system. If the communication is "synchronous" in that the transmitter and receiver share a common clock, the reception and decoding of data is relatively straightforward. However, communications over a substantial distance rarely have the luxury of a common clock, so the receiving system has to "recover" the timing associated with the transmitted data so that it knows when to sample the incoming data to determine the bit values. For example, data transitions can be detected and used to drive a phase-locked loop; the incoming data can be sampled "away" from the transitions to maximize the likelihood that the sampled signal represents valid data.

In addition to the bit timing, the timing of data frames must be recovered. The various data strings or "frames" are typically concatenated prior to transmission so that it can be difficult to determine where one code ends and another begins. Accordingly, serial communications systems typically apply a line-encoding scheme, for example, that adds certain unique strings to help identify frame boundaries. If the frames are all the same size, the unique strings need not be required between each pair of data frames; instead they can be used to synchronize frame recovery at the receiver. Whether they occur every frame or less frequently, the frame boundary codes also add to the number of bits required on average to represent a given amount of data.

In addition to inserting frame-boundary data, line encoders typically perform other functions. For example, the data can be re-encoded to ensure that there are plenty of transitions to improve its bit-timing recovery. Also, the data can be re-encoded to avoid an imbalance in the number of ones and zeros being transmitted so that an electrical transmission is not afflicted by an unwanted DC component. Some line encoders limit the codes employed to those with the desired characteristics. Others use pseudo-random scrambling to achieve the same purpose.

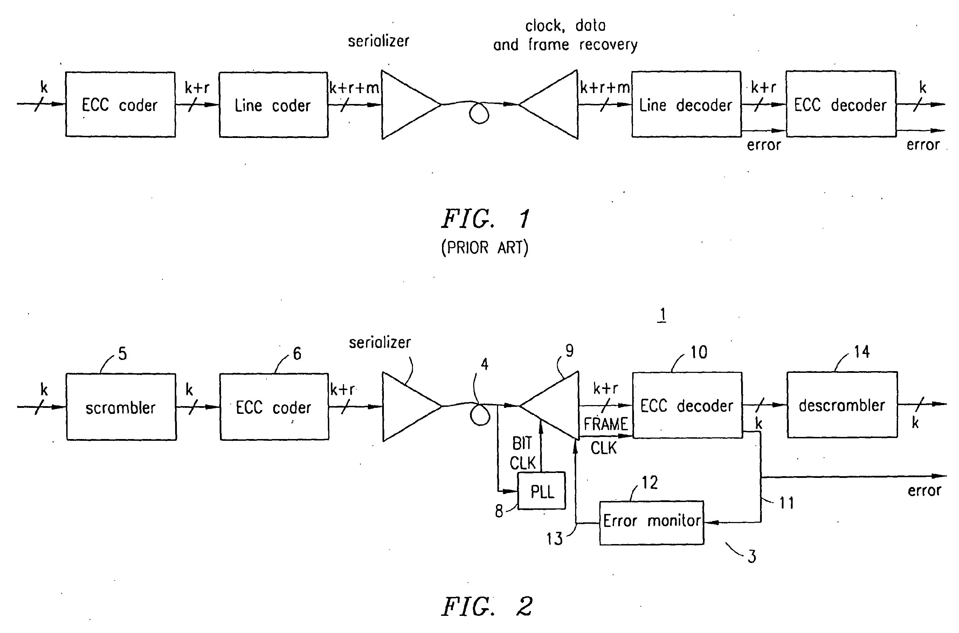

Fig. 1 shows an existing serial communications link. At the transmitter end, a first stage performs an ECC operation on k bits of data to introduce redundancy bits r. A second transmitter stage is the line coder for spectrally shaping the bit stream to, among other things, remove the DC content by balancing the number of high and low logic levels in the bit stream as discussed above. As shown in Fig. 1, the line coder performs coding on k+r bits to generate a frame of k+r+m encoded bits. A serializer unit converts the output of the line coder into a serial stream for transmission over a serial communications channel.

At the receiver of the existing serial communications link of Fig. 1, a recovery circuit recovers the transmitted serial stream and frame timing so as to generate frames of parallel information. A line decoder and an ECC decoder operate in cascade fashion to recover the original k bit data messages in each frame.

From the foregoing it can be seen that error-control coding and line coding to allow timing to be recovered require additional bits to be added to a data stream. Of course, the additional bits consume communications bandwidth, and, thus, conflict with the need for better bandwidth utilization. In addition, some encoding schemes impose an undesirable latency on communications. What is needed is a low-latency serial communication scheme that permits error-control coding and timing recovery, while more effectively utilizing communications bandwidth.

### SUMMARY OF THE PRESENT INVENTION

The present invention provides for a serial data transmitter that scrambles original data and then ECC encodes the scrambled data. On the receiver end, the invention provides for frame recovery using error indications from an ECC decoder. The ECC decoded data can then be descrambled to recover the original data. The ECC coding and decoding provides for error correction. The invention makes use of codes conventionally considered error correction codes, as well as codes not conventionally considered error correction codes as long as the error decoder uses them for error detection.

The invention addresses both the transmitter and the receiver of a communications system. The transmitter can include a scrambler for scrambling original data, an ECC encoder for converting scrambled data into ECC data, and a serializer for converting the ECC data into a serial stream. The receiver can include a frame recoverer for converting the serial data into frame data, an ECC decoder from converting the frame data into ECC data and error indications, and a descrambler for restoring the original data. The frame recoverer can use the error indications in determining frame alignment. Specifically, high error frequencies can be used to indicate framing misalignment and low error frequencies can be used to indicate frame alignment.

More generally, there are several aspects to the invention. In one of its aspects, the invention is a transmitter that performs the scrambling and ECC coding; the transmitter can also include a serializer to convert the ECC data into a serial stream for transmission. In one of its receiver aspects, the invention provides a receiver with a frame-recoverer that uses error indications from an included ECC decoder for frame alignment purposes. In other of its receiver aspects, the invention provides a receiver that includes a scrambler that descrambles the output of an included ECC-decoder. The invention also provides for combinations of the foregoing, as well as method counterparts.

Since the present invention provides for frame alignment using ECC error indications, additional non-ECC bits are not required. Thus, while the invention provides for systems and methods that require bits added for ECC, the invention does not further require additional bits for frame alignment. Thus, the invention requires fewer additional bits than do prior communications systems providing comparable functionality. Furthermore, the latency is limited to that of the applied ECC coding and decoding; the additional latency associated with prior complex line coding scheme are avoided. Since the data is scrambled before ECC coding, the requirements for balanced bit values and frequent transitions are readily met. Furthermore, the invention provides embodiments with other features and advantages in addition to or in lieu of those discussed above. Many of these features and advantages are apparent from the description below with reference to the following drawings.

### BRIEF DESCRIPTION OF THE DRAWINGS

A more complete understanding of the method and apparatus of the present invention may be obtained by reference to the following Detailed Description when taken in conjunction with the accompanying Drawings wherein:
Fig. 1 is a block diagram of a conventional serial communications link;
Fig. 2 is a block diagram of a serial communications link according to exemplary embodiments of the present invention;
Fig. 3 is a block diagram of a portion of the serial communications link of Fig. 2, according to an exemplary embodiment of the present invention;
Fig. 4 is a flow chart illustrating the operation of the serial communications link of Figs. 2 and 3;
Fig. 5 is a block diagram of a portion of the serial communications link of Fig. 2, according to another preferred exemplary embodiment of the present invention; and
Fig. 6 is a flow chart illustrating the operation of the serial communications link of Figs. 2 and 5.

### DETAILED DESCRIPTION OF THE EXEMPLARY EMBODIMENTS OF THE PRESENT INVENTION

Referring to Figs. 2-6, there is shown a communications system 1 according to preferred embodiments of the present invention. In general terms, communications system 1 utilizes scrambling in conjunction with ECC coding so as to increase channel communications and reduce latency while preserving the statistical properties of scrambled line codes.

Communications system 1 is illustrated in Fig. 2 as including a transmitter 2 and receiver 3 that communicate with each other over a serial communications channel 4. Communications system 1 is shown in Fig. 2 as including a first communications device having only a transmitter 2 and a second communications device having only a receiver 3 for reasons of simplicity. It is understood, however, that a communications device may include both a transmitter and a receiver, in addition to other components and/or function blocks.

Transmitter 2 includes a scrambler unit 5 that scrambles groups of k bits so as to statistically balance the number of logic low and logic high bits in the groups and to limit run length. Scrambler unit 5 may include a pseudo random bit sequence (PRBS) generator (not shown) that generates a PRBS and a logic circuit that multiplies the PRBS with the group of k data bits to generate groups of k scrambled data bits. It is understood, however, that scrambler unit 5 may include other circuitry and/or other circuit implementations in performing a scrambling operation.

Transmitter 2 may further include an ECC coder 6 that receives the groups of k scrambled bits generated by scrambler unit 5, performs an ECC encoding operation and generates frames having k data bits and r redundant code bits. The r redundant code bits allow error detection and correction capability. The r redundant code bits implicitly include frame alignment information and/or a frame alignment marker. Because the input to ECC coder 6 is randomized, the output of ECC coder 6 is likewise randomized. This implies that line coding, found in conventional transmitters, is unnecessary. Without line coding, channel utilization is increased. A serializer circuit 7 receives the frames of k+r bits generated by ECC coder 6 and generates a serial stream of bits therefrom for transmission over communications channel C.

It is understood that scrambler unit 5 and ECC coder 6 may be implemented in hardware or as a processor-based unit utilizing coding software or firmware.

In general terms, receiver 3 reframes the serial stream of bits utilizing the frame alignment information implicitly found in the redundant bits of the redundant bits r generated by ECC coder 6. In this way, use of a line coder is advantageously avoided.

In particular, receiver 3 receives the serial bit stream transmitted by transmitter 2 and generates the original groups of k bits therefrom. A phase locked loop (PLL) 8 receives the serial bit stream and generates the bit clock therefrom. A data and frame recovery circuit 9 receives the serial bit stream and the bit clock from PLL 8, recovers the frame clock and organizes the bits from the bit stream into frames of k+r parallel bits. Specifically, the data and frame recovery circuit 9 samples the serial bit stream. The data and frame recovery circuit 9 divides the bit clock to obtain the frame clock. In this exemplary case, the bit clock is divided by the factor k+r to obtain the frame clock. The sampled bits are converted into frames of k+r bits that are aligned with the recovered frame clock.

At this point, the frames of k+r bits generated by the data and frame recovery circuit 9 may or may not correspond to and/or be aligned with the frames of k+r bits generated by ECC coder 6 of transmitter 2. In other words, the frame clock recovered by data and frame recovery circuit 9 may or may not be the same as the frame clock used by ECC coder 6 when organizing the frames of k+r bits for transmission to receiver 3, relative to the serial bit stream. In order to determine whether the frames of k+r bits generated and/or recovered by data and frame recovery circuit 9 are aligned with the transmitted frames of k+r bits, advantage is taken of the ECC coding scheme used in communications system 1.

Specifically, frame misalignment in the received frames will turn frames of otherwise valid ECC code words into invalid ECC code words with reasonably high probability. This probability is high due to the received frames being, for all intents and purposes, random bit patterns. The probability of obtaining invalid ECC codes caused by frame misalignment is seen to be approximately (2^{r} - 1)/2^{r}, resulting in the probability of obtaining a valid ECC code word from a misaligned frame to be 1/2^{r}. Conversely, with correct frame alignment, the frame error rate is relatively low. Therefore, performing an ECC decoding operation on the frames of k+r code words obtained from data and frame recovery circuit 9 may reasonably accurately indicate whether frame misalignment exists. In addition, if two code words are received correctly in succession, then the error probability of the frames still being misaligned is 1/2 ^{(2*r)}. For N words all received without error, the residual probability of false alignment is 1/2^{(N*r)}. This function rapidly decreases with N, allowing a designer to set a threshold of N successive error-free frames to indicate frame alignment to any arbitrarily desired probability. Accordingly, an ECC decoder 10 receives each of the organized/recovered frames of code words, performs an ECC decode operation on the frames and generates the k data bits from each frame and an error signal 11. The k data bits are then descrambled by descrambler unit 14 to obtain the original, unscrambled k bit message.

Error signal 11 indicates the occurrence of errors during the decoding operation. An error monitor circuit 12 receives error signal 11 and generates a frame misalignment signal 13 indicative of whether frame misalignment exists based upon error signal 11. Error monitor circuit 12 may, for example, count the number of frames having decoding errors and assert frame misalignment signal 13 upon decoding errors occurring in a number of frames within a predetermined number or window of consecutive frames. Data and frame recovery circuit 9 receives frame misalignment signal 13. Upon assertion of frame misalignment signal 13 indicating frame misalignment, a new frame clock is obtained and the received bits in the bit stream are reorganized based upon the new frame clock.

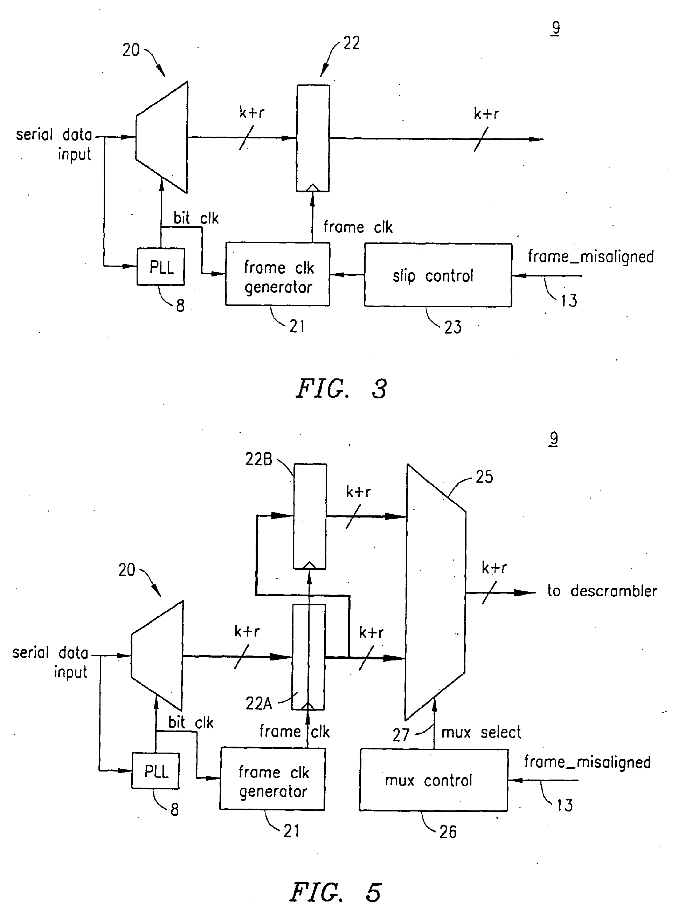

Fig. 3 illustrates a block diagram of data and frame recovery circuit 9 in accordance with an exemplary embodiment of the present invention. Data and frame recovery circuit 9 may include a demultiplexing circuit 20 which receives the incoming serial bit stream and sequentially places the serial bits onto k+r output signals. Demultiplexing circuit 20 may utilize the bit clock to perform the demultiplexing operation . A frame clock circuit 21 receives the bit clock and generates the frame clock therefrom. Register circuitry 22 receives the frame clock and stores the k+r outputs of demultiplexer circuit 20. The k+r bit output of register circuitry 22 forms a frame of k+r coded values. The output of register circuitry 22 is provided to ECC decoder 10 for decoding.

The data and frame recovery circuit 9 of Fig. 3 may further include a slip control circuit 23 that receives frame misalignment signal 13 from error monitor circuit 12 and controls frame clock circuit 21 based upon frame misalignment signal 13. Upon assertion of frame misalignment signal 13, error monitor circuit 12 may temporarily disable the bit clock at the input of frame clock circuit 21 for a predetermined period of time, such as a predetermined number of clock periods appearing on the bit clock. As a result, the frame clock generated by frame clock circuit 21 is shifted in phase by a predetermined number of clock periods of the bit clock. This phase-shifted frame clock becomes the new frame clock utilized to capture a new frame of k+r bits by register circuitry 22 for a subsequent ECC decoding operation.

It is noted that if the predetermined number of clock periods is relatively prime relative to the width or number of bits k+r in a coded frame, most every possible frame alignment may be tested, thereby ensuring that the correct frame alignment can be obtained.

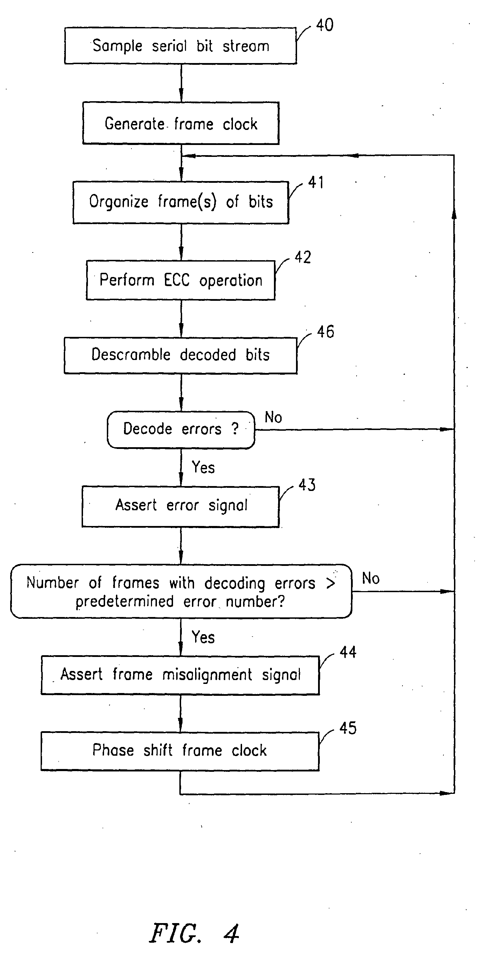

The operation of receiver 3 and the data and frame recovery circuit 9 of Fig. 3 will be described with reference to Fig. 4. Initially, the incoming bit stream is sampled at 40 by the data frame and recovery circuit 9 using the bit clock. A frame clock is also obtained from the bit clock and a frame of coded bits is obtained at 41. Next, the ECC decoder 10 performs an ECC decode operation at 42 on the frame of coded bits. If no errors or a relatively few number of decoding errors occurred, a new frame of bits is organized and an ECC decode operation is performed thereon. However, if one or more decoding errors occurred, error signal 11 is asserted at 43. In the event the number of frames having decoding errors, from the most recently decoded frames, exceeds a predetermined number, frame misalignment error signal 13 is asserted at 44. In response, the frame clock is phase shifted at 45 by a predetermined number of periods of the bit clock to obtain a new frame clock. The new frame clock is used to obtain a new set of one or more frames of coded words. The steps of obtaining frames of coded words and performing an ECC decode operation are repeated until frame misalignment is no longer found to occur. Descrambler unit 14 descrambles the k bit scrambled messages at 46 to obtain the original k bit message. The descrambling operation may be performed immediately following the decoding operation at 42, as shown in Fig. 4, or following a determination that no decoding errors occurred.

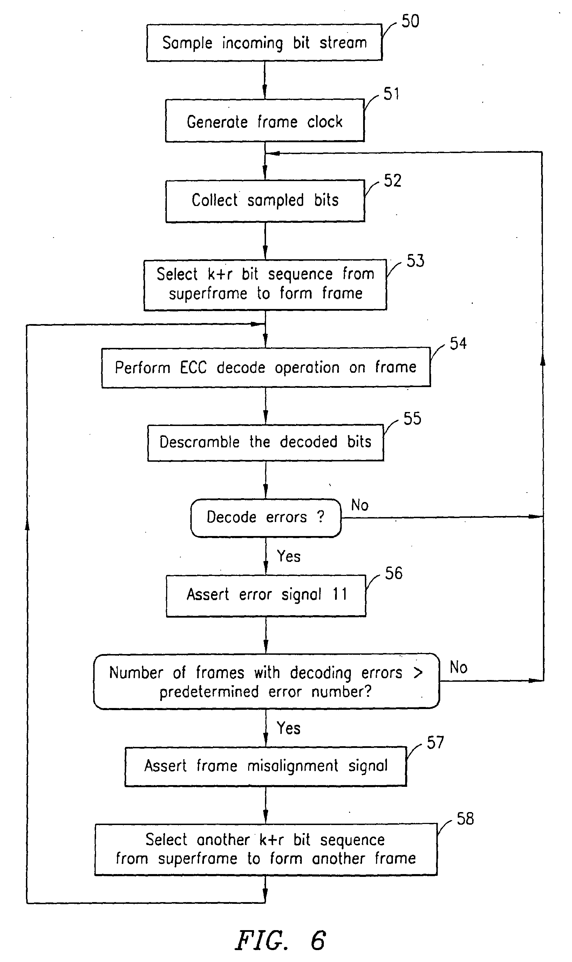

Fig. 5 shows an implementation of data and frame recovery circuit 9 according to another exemplary embodiment of the present invention. Instead of selectively phase shifting the frame clock as seen in the embodiment of the data and frame recovery circuit 9 of Fig. 3, a "super-frame" of sampled bits are obtained by data and frame recovery circuit 9, from which a frame of k+r coded bits are selected for forming a frame to be decoded. In particular, the register circuitry 22 includes two or more registers to generate the super-frame of sampled bits. Registers 22A and 22B are cascaded so that the output of one of the registers 22A is the input of the other register 22B. Each register 22 is clocked by the frame clock, such that sampled bits previously clocked into the first register 22A is stored into register 22B upon the next frame clock. The output of registers 22A and 22B form the super-frame from which a frame of coded bits is obtained. In this exemplary embodiment, the super-frame is 2*(k+r) bits wide.

It is understood that register circuitry 22 may include more than two registers 22A and 22B connected in cascade relation, resulting in a super-frame having more than 2*(k+r) bits from which a frame of coded bits is selected.

The data and frame recovery circuit 9 of Fig. 5 includes multiplexing circuitry 25 adapted to select any sequence of k+r bits from the super-frame as the frame of coded bits to be decoded. Specifically, multiplexing circuitry 25 may include k+r multiplexer circuits, with each multiplexer circuit being capable of performing a k+r:1 multiplexing operation. A multiplex control unit 26 receives frame misalignment error signal 13 and generates control signal(s) 27 that selects, for each k+r multiplexer circuit, the particular bit from the super-frame of coded bits to apply to the output of the k+r multiplexer circuit. Multiplexing circuitry 25 may be seen to perform a shifter operation for selecting a particular sequence or subset of k+r bits from the super-frame of bits. Upon assertion of frame misalignment signal 13, multiplex control unit 26 changes the settings to select a different subset of coded bits from the super-frame to be decoded. In this way, the ECC decoding operation may be performed in an iterative manner until the correct subset of k+r bits of the super-frame, corresponding to a transmitted frame of coded bits, is obtained.

The operation of receiver 3 and the data and frame recovery circuit 9 of Fig. 5 will be described with reference to Fig. 6. Initially, the incoming bit stream is sampled at 50 using the bit clock. The frame clock is obtained at 51 based upon the bit clock. A first set of the sampled bits from the incoming bit stream are collected in register 22A upon the triggering edge of the first frame clock. A second set of sampled bits from the incoming bit stream is collected into register 22A and the first set of sampled bits is stored in register 22B at 52 upon the occurrence of the triggering edge of the second frame clock. At this point in time, a super-frame of 2*(k+r) sampled bits is obtained.

Next, a first sequence of k+r bits is selected at 53 from the super-frame to form a frame of coded bits, based in part upon the multiplex control signals 27 generated by multiplexer control unit 26. An ECC decode operation is performed at 54 on the frame of selected k+r bits to obtain k data bits. The decoded k data bits are descrambled by descrambler unit 14 at 55 to obtain the original message of k data bits.

If the ECC decoding operation yielded little or no errors, a new set of sampled bits are collected and a new frame obtained therefrom for subsequent ECC decoding. However, if one or more decoding errors occurred during the decoding operation, error signal 11 is asserted at 56. In the event the number of frames having decoding errors, from the most recently decoded frames, exceeds a predetermined number, frame misalignment error signal 13 is asserted at 57. In response, multiplex control unit 26 controls multiplexing circuitry 25 to select a different sequence of k+r bits from the super-frame of sampled bits as a new frame of coded bits at 58. Thereafter, an ECC decode operation is performed on the newly formed frame of bits.

Although various embodiments of the method, system, and apparatus of the present invention have been illustrated in the accompanying Drawings and described in the foregoing Detailed Description, it will be understood that the invention is not limited to the embodiments disclosed, but is capable of numerous rearrangements, modifications and substitutions without departing from the scope of the invention as set forth and defined by the following claims.

## Claims

1. A serial communications system (1) comprising:
a scrambler (5) for converting received data into scrambled data; and
an ECC encoder (6) for converting said scrambled data into ECC-encoded data.

2. The system (1) as recited in Claim 1, further comprising:
a serializer for converting said ECC-encoded data into serialized data;
wherein the ECC-encoded data includes frame alignment information; and
the system (1) further comprises a receiver (3) for receiving said serialized data and converting the serialized data into data frames based upon the frame alignment information.

3. The system (1) as recited in Claim 2, wherein the receiver (3) comprises:
a frame-recoverer (9) for converting said serialized data into data frames;
an ECC decoder (10) for converting said data frames into ECC-decoded data and error indications; and
a scrambler (14) for converting said ECC-decoded data into de-scrambled data.

4. The system (1) as recited in Claim 3,wherein said frame-recoverer (9) uses said error indications in converting said serialized data into data frames.

5. The system (1) as recited in one of Claims 1 to 4, wherein said ECC encoder (6) applies an error correction code in converting said scrambled data into said ECC-encoded data.

6. A serial communications method, comprising the steps of:
converting received data into scrambled data; and
converting said scrambled data into ECC-encoded data.

7. The method as recited in Claim 6, further comprising the steps of:
generating a serial stream of the ECC-encoded data; and
transmitting said serial stream.

8. The method of Claim 7, wherein:
the ECC-encoded data includes frame alignment information; and
the method further comprises receiving said serialized data and converting said serialized data into data frames based upon said frame alignment information.

9. The method of Claim 7 or 8, further comprising:
receiving said serialized data;
converting said serialized data into data frames;
converting said data frames into ECC-decoded data and error indications; and
converting said ECC-decoded data into de-scrambled data.

10. The method of Claim 9, wherein the step of converting the serialized data comprises converting the serialized data into data frames based upon said error indications.
